# EUROPEAN PATENT APPLICATION

(11) **EP 2 096 129 A1**
(43) Date of publication of application: **02.09.2009**
(21) Application number: 07850918.9
(22) Date of filing: 19.12.2007
(51) Int. Cl.: C08G 18/42, C08G 101/00

(54) **METHOD FOR PRODUCING SOFT POLYURETHANE FOAM**

(30) Priority: 19.12.2006 JP 2006341615
(71) Applicant: Asahi Glass Company, Limited, Chiyoda-ku Tokyo 100-8405 (JP)
(72) Inventor: SASAKI, Takayuki, Kamisu-city Ibaraki 314-0195 (JP); KUMAGAI, Naohiro, Kamisu-city Ibaraki 314-0195 (JP)
(74) Representative: Hartz, Nikolai
(86) International application number: PCT/JP2007/074448
(87) International publication number: WO 2008/075725

(57) **Abstract**

To produce a flexible polyurethane foam molded product having good air flow and cushioning characteristic and having cell roughening at the skin portion suppressed by using a raw material derived from a natural fat/oil.

A release agent (X) containing a first polysiloxane compound (S1) having a number average molecular weight of at least 1,200 and at most 40,000, in which an organic group having an alkylene oxide chain is bonded to some of silicon atoms constituting the polysiloxane chain, is adhered to the inner surface of a mold, and in the mold, a reactive mixture (Y) containing a polyol (A) containing a polyol (A1) derived from a vegetable fat/oil, a polyisocyanate compound (B) and a silicone foam stabilizer (S) which is a second polysiloxane compound (S2) having a number average molecular weight of at least 150 and less than 1,200 is subjected to mold-foaming.

## Description

### TECHNICAL FIELD

The present invention relates to a process for producing a flexible polyurethane foam.

### BACKGROUND ART

Usually, as a polyol as a raw material for a flexible polyurethane foam, a polyether polyol produced by ring-opening polymerization of an alkylene oxide such as ethylene oxide or propylene oxide to an initiator having an active hydrogen atom is used.

Such a polyether polyol and a flexible polyurethane foam obtained by a reaction of the polyether polyol with an isocyanate compound are chemical products derived from petroleum, and accordingly, their final thermal disposal tends to increase carbon dioxide in air.

In recent years, in consideration of global warming, there has been a demand for a product which does not increase carbon dioxide in the natural world even if it is disposed.

For example, it is obvious that if a urethane product is produced by using, as a raw material, an animal and vegetable oil which is a compound in which carbon dioxide in air is fixed, when such a product is thermally treated, carbon dioxide generated by burning carbon derived from the animal and vegetable oil, does not increase carbon dioxide in nature.

Among natural animal and vegetable oil, castor oil is only one which has hydroxyl groups, and Patent Document 1 discloses a method of producing a polyether by ring-opening polymerization of a monoepoxide with castor oil and/or a modified-castor oil as an initiator, in the presence of a double metal cyanide complex catalyst.

Further, since castor oil is relatively expensive, a method has been proposed to produce an urethane product using soybean oil modified by hydroxyl groups provided by blowing of oxygen and/or air (Patent Documents 2, 3 and 4) or using epoxidized soybean oil (Patent Document 5).

Patent Document 6 discloses a method of producing a flexible polyurethane foam using vegetable oil alone as a polyol, and Patent Document 7 discloses modified vegetable oil modified by hydroxyl groups obtained by reacting vegetable oil with carbon monoxide and hydrogen in the presence of a metal catalyst.

Patent Document 8 discloses a method of producing a low volatile flexible urethane foam using a polyol having an alkylene oxide added to renewable raw materials such as castor oil or soybean oil using a double metal cyanide complex catalyst.

Further, Patent Document 9 discloses a polyurethane foam and an elastomer using a polyol having from 15 to 90 mass% of an alkylene oxide added to hydroxyl group-containing vegetable oil using a double metal cyanide catalyst.

Further, as a release agent to be applied to the inner surface of a mold in molding of a polyurethane foam by foaming and curing in a mold, Patent Document 10 discloses a release agent containing a nitrogen compound and a silicone compound.

Patent Document 11 discloses a release agent containing a silicone resin having an average molecular weight of from 1,000 to 100,000, and dimethyl polysiloxane containing no alkylene oxide is used as the silicone resin.

Patent Document 12 discloses an aqueous release agent comprising a silicone oil containing amino groups, a silicone oil containing no amino group, a higher fatty acid and a low molecular weight amine.

Patent Document 13 discloses an aqueous release agent comprising a wax emulsion and a dimethyl silicone emulsion or an amino-modified silicone emulsion, but the silicone emulsion comprises a silicone oil as the base, and it failed to disclose an alkylene oxide.

Patent Document 14 discloses an aqueous release agent comprising a wax or a silicone compound as a release agent component, and as the silicone compound, a silicone oil, a silicone resin, an amino-containing organopolysiloxane and the like are mentioned, but they are not specifically disclosed.

Patent Document 15 discloses a release agent for a urethane foam comprising a paraffin hydrocarbon in an amount of at least 30 mass% and an ester wax, a polyhydric alcohol ester, a silicone and a fluorinated release agent, but only polydimethylsiloxane is disclosed as the silicone.

Further, in production of a polyurethane foam, a silicone foam stabilizer is known.
Patent Document 1: JP-A-5-163342
Patent Document 2: JP-A-2002-524627
Patent Document 3: US Patent Application Publication 2003/0191274
Patent Document 4: US Patent 6,476,244
Patent Document 5: JP-A-2005-320431
Patent Document 6: US Patent 6,180,686
Patent Document 7: WO2005/033167
Patent Document 8: US Patent Application Publication 2006-0016725
Patent Document 9: EP-A-1712576
Patent Document 10: JP-A-2004-67712
Patent Document 11: JP-A-62-198412
Patent Document 12: JP-A-2000-265068
Patent Document 13: JP-A-9-57761
Patent Document 14: JP-A-2002-30225
Patent Document 15: JP-A-5-337953

### DISCLOSURE OF THE INVENTION

### OBJECT TO BE ACCOMPLISHED BY THE INVENTION

However, in a case where a flexible polyurethane foam is to be produced, when the whole or a part of conventional raw materials derived from petroleum is tried to be replaced with the above raw material derived from a natural fat/oil, the foam cannot sometimes be suitably formed, or even if it is formed, the characteristics may sometime be inferior.

Particularly when a raw material derived from a natural fat/oil is used in production of a molded product by a method of foaming and curing in a closed mold, uniformity of cells tends to be poor, thus leading to cell roughening at the surface portion (skin portion) of the foam. Specifically, at the skin portion of the flexible polyurethane foam, the average cell size is commonly 500 µm or smaller, and when it is within a range of from 500 µm to 600 µm, excellent adhesion to the surface skin will be achieved, but if it is 600 µm or larger, the cell size tends to be large, thus leading to cell roughening.

Further, as physical properties of a flexible polyurethane foam, particularly, good air flow and cushioning characteristic are important, and it has been required to reduce cell roughening of the foam without impairing such physical properties.

The present invention has been accomplished under the above circumstances, and its object is to provide a process for producing a flexible polyurethane foam capable of producing a flexible polyurethane foam molded product having good air flow and cushioning characteristic and having its cell roughening at the skin portion suppressed, using a raw material derived from a natural fat/oil.

### MEANS TO ACCOMPLISH THE OBJECT

The present invention is to accomplish the above object, and the process for producing a flexible polyurethane foam of the present invention is a process for producing a flexible polyurethane foam, which comprises a step of injecting a reactive mixture (Y) containing a polyol (A), a polyisocyanate compound (B) and a silicone foam stabilizer (S) into a mold to the inner surface of which a release agent (X) is adhered, and a step of sealing the mold and foaming and curing the reactive mixture (Y), wherein the release agent (X) contains a first polysiloxane compound (S1) having a number average molecular weight of at least 1,200 and at most 40,000, in which an organic group having an alkylene oxide chain is bonded to some of silicon atoms constituting the polysiloxane chain; the polyol (A) contains a polyol (A1) derived from a vegetable fat/oil; and the silicone foam stabilizer (S) in the reactive mixture (Y) is a second polysiloxane compound (S2) having a polysiloxane chain and having a number average molecular weight of at least 150 and less than 1,200.

Particularly, the polyol (A1) derived from a vegetable fat/oil is preferably a polyol derived from soybean oil.

### EFFECT OF THE INVENTION

According to the present invention, a flexible polyurethane foam molded product having good air flow and cushioning characteristic and having cell roughening at the skin portion suppressed can be obtained by using a raw material derived from a natural fat/oil.

### BEST MODE FOR CARRYING OUT THE INVENTION

In the present invention, the number average molecular weight (Mn) and the mass average molecular weight (Mw) are molecular weights calculated as polystyrene. Specifically, they are values measured by the following method. With respect to some types of monodispersed polystyrene polymers having different polymerization degrees, which are commercially available as standard samples for molecular weight measurement, gel permeation chromatography (GPC) is measured by using a commercially available GPC measuring device, and based on the relation of the molecular weight and the retention time of each polystyrene, a calibration curve is prepared. By using the calibration curve, the GPC spectrum of a sample compound to be measured, is analyzed by a computer, whereby the number average molecular weight and the mass average molecular weight of the sample compound are obtained. Such a measuring method is publicly known.

### RELEASE AGENT (X)

In the present invention, in the release agent (X) to be adhered to the inner surface of a mold, a first polysiloxane compound (S1) (hereinafter sometimes referred to as first polysiloxane (S1)) is contained as an essential component.

The release agent (X) is specifically preferably one obtained by adding and mixing the first polysiloxane (S1) to a release agent stock solution containing a hydrocarbon wax component.

The release agent stock solution containing a hydrocarbon wax component may be a solvent type release agent stock solution or an aqueous release agent stock solution. The non-volatile content (hydrocarbon wax component) in the release agent stock solution is preferably from 0.1 to 45.0 mass%, and the melting point of the non-volatile content is preferably from 80 to 105°C.

It is preferred that in the release agent (X), components other than the volatile content are the hydrocarbon wax component and the first polysiloxane (S1).

The hydrocarbon wax component may, for example, be specifically polyethylene or paraffin.

### FIRST POLYSILOXANE COMPOUND (S1)

The first polysiloxane (S1) to be contained in the release agent (X) is a polysiloxane compound which has a polysiloxane chain comprising a repeated structure of a siloxane bond, in which an organic group having an alkylene oxide chain is bonded to some of silicon atoms constituting the polysiloxane chain, and which has a number average molecular weight of at least 1,200 and at most 40,000. An organic group having no alkylene oxide chain may be bonded to silicon atoms to which the above "organic group having an alkylene oxide chain" is not bonded among silicon atoms constituting the polysiloxane chain.

In the present invention, as the first polysiloxane (S1), one within the above range may be obtained among polysiloxane compounds commercially available as a foam stabilizer, or it may be prepared by a known means.

When the first polysiloxane (S1) has a number average molecular weight of at least 1,200, cell roughening of the flexible polyurethane foam to be obtained will be suppressed. However, if the number average molecular weight exceeds 40,000, the viscosity of the polysiloxane compound tends to be too high, whereby it tends to be difficult to handle the polysiloxane compound. The number average molecular weight is preferably from 1,200 to 35,000, more preferably from 1,200 to 30,000. The first polysiloxane (S1) may be used in the form of a mixture containing a polyol and a diluent such as a solvent. The content of the first polysiloxane (S1) in the mixture is not particularly limited but is preferably at least 30 mass%.

The first polysiloxane (S1) is preferably one derived from dimethylpolysiloxane, and specifically preferred is one represented by the following formula (1)

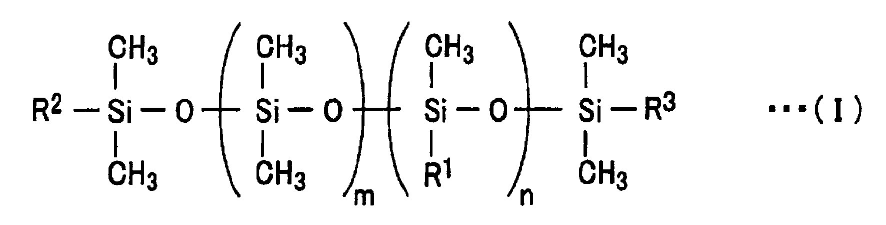

In the formula, R¹ is -C₃H₆O-(AO)-Z. Each of R² and R³ is a C₁₋₂₂ linear or branched alkyl group or -C₃H₆O-(AO)-Z. R¹, R² and R³ are independent of one another and may be the same or different. m>0 and n>0. Each of m and n is the average per molecule.

AO is an alkylene oxide chain formed by ring-opening polymerization of ethylene oxide and propylene oxide or an alkylene oxide chain formed by ring-opening polymerization of ethylene oxide alone. The average number of ethylene oxide and propylene oxide per molecule is preferably from 4 to 100.

Z is a C₁₋₂₂ linear or branched alkyl group or a hydrogen atom. The alkyl group as Z preferably has from 1 to 10 carbon atoms, more preferably from 1 to 5 carbon atoms.

The alkyl group as R₂ or R₃ preferably has from 1 to 10 carbon atoms, more preferably from 1 to 5 carbon atoms, and it is most preferably a methyl group.

The molar ratio of ethylene oxide (EO)/propylene oxide (PO) constituting the alkylene oxide chain (AO) is preferably within a range of from 100/0 to 5/95, more preferably from 100/0 to 10/90. When the ratio of ethylene oxide to propylene oxide is within the above range, cell roughening at the skin portion of the flexible polyurethane foam to be obtained can be suppressed.

When the alkylene oxide chain (AO) is formed by ring-opening polymerization of ethylene oxide and propylene oxide, either polymerization method of block polymerization and random polymerization may be employed, or block polymerization and random polymerization may be combined.

One type of the first polysiloxane (S1) may be used, or two or more types may be used in combination. The amount of use of the first polysiloxane (S1) is preferably from 0.1 to 70 mass%, more preferably from 1 to 60 mass% in the release agent (X).

If the content of the first polysiloxane (S1) in the release agent (X) is less than 0.1 mass%, the effect of suppressing cell roughening of the flexible polyurethane foam to be obtained tends to be insufficient, and a content exceeding 70 mass% is unfavorable in view of economical efficiency.

### SECOND POLYSILOXANE COMPOUND (S2)

The reactive mixture (Y) in the present invention comprises a polyol (A), a polyisocyanate compound (B) and a silicone foam stabilizer (S), and as the silicone foam stabilizer (S), a second polysiloxane compound (S2) (hereinafter sometimes referred to as second polysiloxane (S2)) is used.

The second polysiloxane (S2) is a polysiloxane compound having a polysiloxane chain comprising a repeated structure of a siloxane bond and having a number average molecular weight of at least 150 and less than 1,200. An organic group may be bonded to a silicon atom constituting the polysiloxane chain.

As the second polysiloxane (S2), one within the above range may be properly selected from among polysiloxane compounds commercially available as a foam stabilizer, or it may be prepared by a known means.

When the number average molecular weight of the second polysiloxane (S2) is at least 150 and less than 1,200, physical properties such as the air flow of the flexible polyurethane foam to be obtained tend to be favorable. The number average molecular weight is preferably from 200 to 1,200, more preferably from 250 to 1,200.

The second polysiloxane (S2) is preferably selected from dimethylpolysiloxane and a modified product thereof, and specifically preferred is one represented by the following formula (II). The second polysiloxane (S2) may be used in the form of a mixture containing a polyol and a diluent such as a solvent. The content of the second polysiloxane (S2) in the mixture is not particularly limited but is preferably at least 5 mass%.

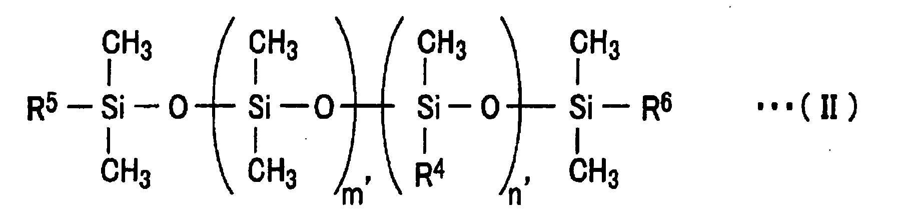

In the formula, R⁴ is -C₃H₆O-(EO)-Z'. Each of R⁵ and R⁶ is a C₁₋₂₂ linear or branched alkyl group or -C₃H₆O-(EO)-Z'. R⁴, R⁵ and R⁶ are independent of one another and may be the same or different. m'≧0 and n'≧0. Each of m' and n' is the average per molecule. Further, (m'+n')>0.

EO is an ethylene oxide chain formed by ring-opening polymerization of ethylene oxide, and the average number per molecule is preferably from 1 to 15.

Z' is a C₁₋₂₂ linear or branched alkyl group or a hydrogen atom. The alkyl group as Z' preferably has from 1 to 10 carbon atoms, more preferably from 1 to 5 carbon atoms.

The alkyl group as R⁵ or R⁶ preferably has from 1 to 10 carbon atoms, more preferably from 1 to 5 carbon atoms, and it is most preferably a methyl group.

One type of the second polysiloxane (S2) may be used, or two or more types may be used in combination. The amount of use of the second polysiloxane (S2) is preferably from 0.1 to 10 parts by mass, more preferably from 0.1 to 5.0 parts by mass per 100 parts by mass in total of the polyol (A) and after-mentioned other high molecular weight active hydrogen compound in the reactive mixture (Y). When the amount of use of the second polysiloxane (S2) is at least 0.1 part by mass, the polyol, the blowing agent and the isocyanate will be well mixed, and when it is at most 10 parts by mass, the flexible polyurethane foam will be stably foamed.

Further, in the reactive mixture (Y), another known foam stabilizer may be used in combination with the silicone foam stabilizer (S). Such another foam stabilizer may, for example, be a fluorinated foam stabilizer or a common surface active agent such as an alkylbenzene sulfonic acid. In a case where another foam stabilizer is used in combination, the proportion of another foam stabilizer in the total amount of foam stabilizers contained in the reactive mixture (Y) is preferably at most 3 mass% in view of foaming stability of the flexible polyurethane foam.

### POLYOL (A)

The polyol (A) in the present invention at least contains a polyol (A1) derived from a vegetable fat/oil (hereinafter sometimes referred to as polyol (A1)).

### POLYOL (A1) DERIVED FROM A VEGETABLE FAT/OIL

As the polyol (A1) derived from a vegetable fat/oil, specifically, a polyol comprising a vegetable fat/oil having hydroxyl groups or a modified product thereof (hereinafter referred to as polyol (i)); a polyol obtained by providing a vegetable fat/oil having no hydroxyl group with hydroxyl groups or a modified product thereof (hereinafter referred to as polyol (ii)); or a polyoxyalkylene polyol obtained by using the above polyol (i) or (ii) as an initiator (b) and by ring-opening polymerization of an alkylene oxide (c) to the above initiator (b) (hereinafter referred to as polyoxyalkylene polyol (iii)) may be used.

### Polyol (i)

The polyol comprising a vegetable fat/oil having hydroxyl groups as the polyol (i) may, for example, be specifically castor oil. Further, as the polyol (i), a castor oil modified product obtained by hydrolyzing castor oil to obtain ricinoleic acid, polymerizing it to obtain ricinoleic acid condensate, and subjecting the ricinoleic acid condensate and a polyhydric alcohol to ester exchange may also be used.

### Polyol (ii)

The polyol (ii) is specifically a polyol high molecular weight product obtained by providing a natural vegetable fat/oil originally having no hydroxyl group with hydroxyl groups by chemical reaction, or a modified product thereof.

The mass average molecular weight (Mw) of the polyol (ii) is preferably at least 1,500 in view of compatibility and mechanical physical properties, more preferably at least 1,700, furthermore preferably at least 2,000. The upper limit of Mw of the polyol derived from a vegetable fat/oil is not particularly limited but is preferably at most 500,000, more preferably at most 100,000, whereby the viscosity will be low, thus leading to good flowability.

The vegetable fat/oil as the raw material of the polyol (ii) is preferably one containing an aliphatic acid glyceride having unsaturated double bonds. The vegetable fat/oil having unsaturated double bonds may, for example, be linseed oil, safflower oil, soybean oil, tung oil, poppy oil, rapeseed oil, sesame oil, rice oil, camellia oil, olive oil, tall oil, palm oil, cotton oil or com oil.

Further, hydroxyl groups are provided by using unsaturated bonds, and it is accordingly preferred that the iodine value is high, since the reactivity is thereby high, and it is possible to introduce more hydroxyl groups. Therefore, one having an iodine value of at least 50 is preferred, and specifically it may, for example, be linseed oil, safflower oil, soybean oil, tung oil, poppy oil, rapeseed oil, sesame oil, rice oil, camellia oil, olive oil, tall oil, cotton oil or com oil. Further, one having an iodine value of at least 100 is preferred, and specifically it may, for example, be linseed oil, safflower oil, soybean oil, tung oil, poppy oil, rapeseed oil, sesame oil, rice oil, tall oil, cotton oil or corn oil. Particularly, soybean oil is preferred since it is placed on the market in a large amount and is thereby available stably at a low cost.

As a method for producing the polyol (ii), a known method may be suitably used. Specific examples may be a method (1) wherein air or oxygen is blown in a vegetable fat/oil (a blowing method), a method (2) wherein after a vegetable fat/oil is epoxidized, the epoxy rings are ring-opened to form hydroxyl groups (a post epoxidation hydroxyl group-providing method), a method (3) wherein after double bonds of a vegetable fat/oil are reacted with carbon monoxide and hydrogen in the presence of a specific metal catalyst to form carbonyl, hydrogen is further reacted therewith to introduce primary hydroxyl groups, a method (4) wherein the method (2) or the method (3) is carried out after the method (1), and a method (5) wherein the method (1) is carried out after the method (2) or the method (3).

Among these methods, the methods (1) and (2) which are carried out individually, are preferred from the viewpoint of cost merit.

### Polyoxyalkylene Polyol (iii)

The polyoxyalkylene polyol (iii) is produced by using each of the above polyols (i) and (ii) as an initiator (b) and by ring-opening polymerization of an alkylene oxide (c) to the initiator (b) preferably in the presence of an after-mentioned polymerization catalyst (a).

### (Alkylene Oxide (c))

The alkylene oxide (c) to be used for the production of the above polyoxyalkylene polyol (iii) is not particularly limited so long as it is a ring-opening polymerizable alkylene oxide.

Specific examples may be ethylene oxide, propylene oxide, styrene oxide, butylene oxide, cyclohexene oxide, a glycidyl compound such as glycidyl ether or glycidyl acrylate, and oxetane.

One type of the alkylene oxide (c) may be used or two or more types may be used in combination. When two or more types of alkylene oxides (c) are used in combination, it is possible to produce one type of the polyalkylene polyol (iii) by either polymerization method of block polymerization or random polymerization, or by a combination of both block polymerization and random polymerization.

### (Another Cyclic Compound)

When the polyoxyalkylene polyol (iii) is to be produced, a monomer of another cyclic compound other than the alkylene oxide (c) may be present in the reaction system.

Such a cyclic compound may be a cyclic ester such as ε-caprolactone or lactide, or a cyclic carbonate such as ethylene carbonate, propylene carbonate or neopentyl carbonate. They may be random-polymerizable or block-polymerizable.

Especially, it is preferred to use a lactide derived from lactic acid obtained by fermentation of sugar derived from a plant, since it is thereby possible to further increase the content of a non-petroleum component in the polyoxyalkylene polyol (iii).

### (Polymerization Catalyst (a))

The polymerization catalyst (a) is preferably at least one member selected from a coordination anionic polymerization catalyst, a cationic polymerization catalyst and a phosphezenium catalyst. A known one may suitably be used. More preferred is a coordination anionic polymerization catalyst.

The cationic polymerization catalyst may, for example, be lead tetrachloride, tin tetrachloride, titanium tetrachloride, aluminum trichloride, zinc chloride, vanadium trichloride, antimony trichloride, metal acetylacetonate, phosphorus pentafluoride, antimony pentafluoride, a boron trifluoride-coordinated compound (for example, boron trifluoride diethyl etherate, boron trifluoride dibutyl etherate, boron trifluoride dioxanate, boron trifluoride acetic anhydride or a boron trifluoride triethylamine complex compound), an inorganic or organic acid (for example, perchloric acid, acetyl perchlorate, t-butyl perchlorate, hydroxyacetic acid, trichloroacetic acid, trifluoroacetic acid, p-toluenesulfonic acid or trifluoromethanesulfonic acid), a metal salt of such an organic acid, a composite fluoride (for example, triethyloxonium tetrafluoroborate, triphenylmethyl hexafluoroantimonate, allyldiazonium hexafluorophosphate or allyldiazonium tetrafluoroborate), an alkyl metal salt (for example, diethylzinc, triethylaluminum or diethylaluminum chloride), heteropolyacid, or isopolyacid.

Among them, particularly preferred is Mo₂(diketonate)Cl, Mo₂(diketonate)OSO₂CF₃, trifluoromethanesulfonic acid, boron trifluoride, a boron trifluoride coordinated compound (for example, boron trifluoride diethyl etherate, boron trifluoride dibutyl etherate, boron trifluoride dioxanate, boron trifluoride acetic anhydrate or a boron trifluoride triethylamine complex compound).

Further, the cationic polymerization catalyst is preferably an aluminum or boron compound having at least one aromatic hydrocarbon group containing a fluorine element or aromatic hydrocarbon oxy group containing a fluorine element. The aromatic hydrocarbon group containing a fluorine element is preferably at least one member selected from the group consisting of pentafluorophenyl, tetrafluorophenyl, trifluorophenyl, 3,5-bis(trifluoromethyl)trifluorophenyl, 3,5-bis(trifluoromethyl)phenyl, β-perfluoronaphthyl and 2,2',2"-perfluorobiphenyl. The aromatic hydrocarbon oxy group containing a fluorine element is preferably an aromatic hydrocarbon oxy group having an oxygen element bonded to the above aromatic hydrocarbon group containing a fluorine element.

The aluminum or boron compound having at least one aromatic hydrocarbon group containing a fluorine element or aromatic hydrocarbon oxy group containing a fluorine element, is preferably a boron compound or an aluminum compound as a Lewis acid, disclosed in for example, JP-A-2000-344881, JP-A-2005-82732 or WO03/000750.

Specific examples of the Lewis acid may be tris(pentaflorophenyl)borane, tris(pentaflorophenyl)aluminum, tris(pentaflorophenyloxy)borane and tris(pentaflorophenyloxy)aluminum. Among them, tris(pentaflorophenyl)borane is a particularly preferred catalyst since it has a high catalytic activity for the ring-opening polymerization of the alkylene oxide.

A counter cation of the onium salt is preferably trityl cation or anilinium cation, and the onium salt is particularly preferably trityl tetrakis(pentafluorophenyl)borate or N,N'-dimethylanilinium tetrakis(pentafluorophenyl)borate.

The coordination anionic polymerization catalyst is particularly preferably a double metal cyanide complex catalyst (hereinafter sometimes referred to as DMC catalyst) having an organic ligand. The double metal cyanide complex catalyst having an organic ligand can be produced by a known production method. For example, it can be produced by a method disclosed in JP-A-2003-165836, JP-A-2005-15786, JP-A-7-196778 or JP-A-2000-513647.

The phosphazenium catalyst can be obtained by a known method such as a method disclosed in, for example, JP-A-11-106500.

Specifically, tetrakis[tris(dimethylamino)phosphoranylidenamino]phosphonium hydroxide may, for example, be mentioned.

### (Method of Producing Polyoxyalkylene Polyol (iii))

In a reactor, in the presence of the polymerization catalyst (a), the alkylene oxide (c) is ring-opening polymerized with the initiator (b) to produce the polyoxyalkylene polyol (iii). The ring-opening polymerization reaction of the alkylene oxide (c) can be carried out by optionally using a known method.

Specifically, into a pressure proof reactor equipped with a stirrer and a cooling jacket, the initiator (b) is first introduced, and the polymerization catalyst (a) is added thereto. Then, to the mixture of the initiator (b) and the polymerization catalyst (a), the alkylene oxide (c) is added to carry out a reaction, whereby the polyoxyalkylene polyol (iii) is produced. It is possible to homopolymerize one alkylene oxide (c) to the initiator (b), and it is also possible to block-polymerize and/or random-polymerize two or more alkylene oxides (c).

The polymerization reaction of the alkylene oxide (c) can also be carried out by using a reaction solvent. The preferred reaction solvent may, for example, be an aliphatic hydrocarbon such as hexane, heptane or cyclohexane; an aromatic hydrocarbon such as benzene, toluene or xylene; or a halogen type solvent such as chloroform or dichloromethane. Further, the amount of the solvent to be used is not particularly limited, and it is possible to use the solvent in a desired amount.

Further, by adding an antioxidant, an anticorrosive or the like to the obtained polyoxyalkylene polyol (iii), it is possible to prevent deterioration during storage for a long period of time.

The mass average molecular weight of the polyoxyalkylene polyol (iii) is preferably from 1,500 to 500,000, more preferably from 1,500 to 300,000, particularly preferably from 2,000 to 100,000.

Cell roughening at the time of production of a molded product is likely to occur particularly with the polyol (ii) or the polyoxyalkylene polyol (iii) obtained by using the polyol (ii) as the initiator (b) among the polyol (i), the polyol (ii) and the polyoxyalkylene polyol (iii), and accordingly, it is preferred to apply the process of the present invention.

The following may be mentioned as specific examples of such a polyol.

A hydroxyl group-containing polymer compound modified by hydroxyl groups provided by blowing of oxygen and/or air to double bonds in a natural vegetable fat/oil and its derivative (the above Patent Document 2).

A polyol obtained by ring-opening polymerization of an alkylene oxide to a modified polyol obtained by providing a natural vegetable fat/oil with hydroxyl groups by blowing of oxygen and/or air and subjecting it to ester-modification by using an amine or a metallic catalyst such as potassium hydroxide (the above Patent Document 3).

A polyol derived from soybean oil modified by hydroxyl groups obtained by ring-opening polymerization of epoxidized soybean oil in the presence of excess water or alcohol to provide the soybean oil with hydroxyl groups, or a polyol derived from soybean oil obtained by copolymerizering the hydroxyl group-provided epoxidized soybean oil with an alkylene oxide (the above Patent Document 5).

A polyol derived from a vegetable oil obtained by reacting vegetable oil with carbon monoxide and hydrogen in the presence of a metallic catalyst, and one obtained by adding an alkylene oxide to the polyol derived from a vegetable oil (the above Patent Document 7).

A polyol obtained by adding an alkylene oxide to renewable raw materials such as castor oil or soybean oil by using a double metal cyanide complex catalyst (the above Patent Document 8).

A polyol obtained by adding from 15 to 90 mass% of an alkylene oxide to a hydroxyl group-containing vegetable oil by using a double metal cyanide catalyst (the above Patent Document 9).

Further, as commercial products, Soyol series, tradename, manufactured by Urethane Soy Systems as an aerated soybean oil obtained by providing soybean oil with hydroxyl groups by blowing and ADK CIZER O-130P, tradename, manufactured by ADEKA CORPORATION as an epoxidized soybean oil obtained by epoxidizing soybean oil may, for example, be mentioned.

In the present invention, the polyol (A1) is particularly preferably a polyol derived from soybean oil using soybean oil as a raw material, i.e. the polyol (ii) obtained from soybean oil or the polyoxyalkylene polyol (iii) obtained by using the polyol (ii) obtained from soybean oil as the initiator (b).

One type of the polyol (A1) may be used, or two or more types may be used in combination.

### ANOTHER POLYOL (A2)

The polyol (A) preferably contains the above polyol derived from a vegetable fat/oil (polyol (A1)) and another polyol (hereinafter referred to as polyol (A2)).

The polyol (A2) is a polyol not included in the polyol (A1) and specifically, a polyol derived from petroleum known as a raw material of a polyurethane can be used.

The polyol (A2) is preferably one having 2 to 8 active hydrogen-containing groups on average per molecule and having a hydroxyl value of from 20 to 160 mgKOH/g.

When the average number of active hydrogen-containing groups in the polyol (A2) is 2 or more, favorable durability and cushioning characteristic of the foam are likely to be obtained, and when it is at most 8, the flexible foam to be produced will not be too hard, whereby favorable mechanical properties such as elongation will be achieved.

When the hydroxyl value of the polyol (A2) is at least 20 mgKOH/g, the viscosity will not be too high, whereby good workability will be achieved, and when it is at most 160 mgKOH/g, the flexible foam to be produced will not be too hard, whereby favorable mechanical properties such as elongation will be achieved.

The mass average molecular weight of the polyol (A2) is preferably from 700 to 22,000, more preferably from 1,500 to 20,000, particularly preferably from 2,000 to 15,000.

As examples of the polyol (A2), preferred is a polyoxyalkylene polyol obtained by ring-opening polymerization of a cyclic ether compound to an initiator in the presence of a ring-opening polymerization catalyst, a polyester polyol or a polycarbonate polyol.

One type of the polyol (A2) may be used, or two or more types may be used as mixed. When two or more types of the polyols are used as mixed, the average number of active hydrogen-containing groups, the hydroxyl value and the mass average molecular weight of the respective polyols to be mixed are preferably within the above preferred ranges.

### (Polyoxyalkylene Polyol)

The ring-opening polymerization catalyst to be used for preparation of the polyoxyalkylene polyol as the polyol (A2) may, for example, be an alkali metal compound catalyst such as a sodium type catalyst, a potassium type catalyst or a cesium type catalyst, a cationic polymerization catalyst, a double metal cyanide complex catalyst or a phosphazenium compound.

The initiator may, for example, be ethylene glycol, diethylene glycol, propylene glycol, dipropylene glycol, neopentyl glycol, 1,4-butanediol, 1,6-hexanediol, glycerin, trimethylolpropane, pentaerythritol, diglycerin, dextrose, sucrose, bisphenol A, ethylenediamine or a polyoxyalkylene polyol having a molecular weight lower than the desired product obtained by adding an alkylene oxide thereto.

The cyclic ether compound is preferably, for example, an alkylene oxide having at least 2 carbon atoms. Specifically, ethylene oxide, propylene oxide, 1,2-butylene oxide, 2,3-butylene oxide or styrene oxide may be mentioned. It is preferred to use propylene oxide or ethylene oxide.

When ethylene oxide is used, the content of ethylene oxide in the polyol (A2) is preferably at most 30 mass%, more preferably at most 25 mass%. When the content of ethylene oxide is at most 30 mass%, the reactivity becomes proper, and the moldability becomes good.

### (Polyester Polyol)

The polyester polyol as the polyol (A2) may, for example, be a lactone type polyol such as an ε-caprolactone ring-opening polymerized product or β-methyl-δ-valerolactone ring-opening polymerized product, or one obtained by condensing a low-molecular-weight polyol such as a C₂₋₁₀ divalent alcohol such as ethylene glycol or propylene glycol, a C₂₋₁₀ trivalent alcohol such as glycerin, trimethylolpropane or trimethylolethane, a tetravalent alcohol such as pentaerythritol, diglycerin, or a sugar such as sorbitol or sucrose, with a carboxylic acid such as a C₂₋₁₀ dicarboxylic acid such as succinic acid, adipic acid, maleic acid, fumaric acid, phthalic acid or isophthalic acid, or a C₂₋₁₀ acid anhydride such as succinic anhydride, maleic anhydride or phthalic anhydride.

### (Polycarbonate Polyol)

The polycarbonate polyol as the polyol (A2) may, for example, be one obtained by a dehydrochlorination reaction of phosgene with a low-molecular-weight alcohol to be used for synthesis of the polyester polyol, or by an ester exchange reaction of the low-molecular-weight alcohol with diethylene carbonate, dimethyl carbonate, diphenyl carbonate or the like.

In the present invention, when the polyol (A1) and the polyol (A2) are used in combination as the polyol (A), the mass ratio of the polyol (A1) to the polyol (A2), (A1)/(A2), in the polyol (A) is preferably in a range of from 10/90 to 90/10, more preferably from 15/85 to 80/20. In the total mass of them, when the amount of the polyol (A2) to be used is at least 10 mass%, the moldability of a flexible polyurethane foam is suitably improved, and it is preferably at most 90 mass% from the viewpoint of the prevention of global warming.

### POLYMER PARTICLES-DISPERSED POLYOL

In the present invention, as the polyol (A1), it is possible to use a polymer particles-dispersed polyol having the polyol (A1) as the base polyol.

Further, as the polyol (A2), it is possible to use a polymer particles-dispersed polyol having the polyol (A2) as the base polyol.

Further, it is possible that a polymer particles-dispersed polyol having the polyol (A1) as the base polyol, is obtained, and then mixed with the polyol (A2) to obtain a polyol (A) having the polymer particles stably dispersed. Further, similarly, it is possible that a polymer particles-dispersed polyol having the polyol (A2) as the base polyol, is obtained, and then mixed with the polyol (A1) to obtain a polyol (A) having the polymer particles stably dispersed.

The polymer particles-dispersed polyol is a dispersion system wherein polymer particles (dispersoid) are stably dispersed in a base polyol (dispersion medium). The polymer of the polymer particles may be an addition polymerization type polymer or a condensation polymerization type polymer. A specific example may be an addition polymerization type polymer such as a copolymer or homopolymer of acrylonitrile, styrene, a methacrylate, an acrylate or another vinyl monomer; or a condensation polymerization type polymer such as polyester, polyurea, polyurethane or melamine. By the presence of the polymer particles, the hydroxyl value of the entire polymer parficles-dispersed polyol is usually lower than the hydroxyl value of the base polyol.

The content of the polymer particles in the polymer particles-dispersed polyol is preferably at most 50 mass%. The amount of the polymer particles is not required to be particularly large. However, even if it is too large, there is no particular disadvantage except for an economical aspect. The amount is usually preferably from 3 to 50 mass%, more preferably from 3 to 35 mass%. To disperse the polymer particles in the base polyol is useful to improve the hardness, air flow and other physical properties of the foam. Further, when the mass of the polymer particles-dispersed polyol is used for a calculation, the mass of the polymer particles is not included.

When the polymer particles-dispersed polyol is used as the polyol (A1), the numerical value for the mass average molecular weight relating to the above polyol (A1), is the numerical value for the base polyol.

When the polymer particles-dispersed polyol is used as the polyol (A2), the numerical values for the average number of active hydrogen-containing groups, the hydroxyl value and the mass average molecular weight relating to the above polyol (A2), are the numerical values for the base polyol.

### ANOTHER HIGH MOLECULAR WEIGHT ACTIVE HYDROGEN COMPOUND

As a compound to be reacted with the polyisocyanate compound (B), it is possible to use the polyol (A) and another high molecular weight active hydrogen compound in combination.

Such another high molecular weight active hydrogen compound is a compound having at least 2 active hydrogen-containing groups and may, specifically, be a high molecular weight polyamine having at least 2 primary amino groups or secondary amino groups; a high molecular weight compound having at least one primary amino group or secondary amino group and at least one hydroxyl group; or a piperazine type polyol.

The molecular weight of such another high molecular weight active hydrogen compound is preferably at least 400, more preferably at least 800, per active hydrogen group. Further, the number of active hydrogen-containing groups per molecule is preferably from 2 to 8. The molecular weight per active hydrogen-containing group is preferably at most 5,000.

Such another high molecular weight active hydrogen compound may be a compound obtained by converting some or all hydroxyl groups in the above polyol (A1) or (A2) to amino groups, or a compound obtained in such a manner that a prepolymer having isocyanate groups at its terminals, is obtained by reacting the polyol (A1) or (A2) with an excess equivalent of a polyisocyanate compound, and the isocyanate groups of the prepolymer are converted to amino groups by hydrolysis.

Further, the piperazine type polyol is a polyoxyalkylene polyol obtained by ring-opening polymerization of an alkylene oxide with a piperazine. The piperazine in present invention means not only piperazine but also a substituted piperazine wherein a hydrogen atom in piperazine is substituted by an organic group such as an alkyl group or an aminoalkyl group. The piperazine is required to have at least two active hydrogen atoms which may be reacted with an alkylene oxide. In such a piperazine type polyol obtained by ring-opening polymerization of an alkylene oxide, two nitrogen atoms constituting a piperazine ring constitute tertiary amines.

Specific examples of the piperazine may be piperazine; an alkyl piperazine in which a hydrogen atom bonded to a carbon atom constituting the ring is substituted by a lower alkyl group, such as 2-methylpiperazine, 2-ethylpiperazine, 2-butylpiperazine, 2-hexylpiperazine, 2,5-, 2,6-, 2,3-or 2,2-dimethylpiperazine or 2,3,5,6- or 2,2,5,5-tetramethylpiperazine; and an N-aminoalkylpiperazine in which a hydrogen atom bonded to a nitrogen atom constituting the ring, is substituted by an aminoalkyl group, such as N-(2-aminoethyl)piperazine. Among such piperazines, preferred is a substituted piperazine, and more preferred is a substituted piperazine having at least 3 nitrogen atoms in a molecule, such as piperazine having hydrogen substituted by an aminoalkyl group or the like. Further, among substituted piperazines, an N-substituted piperazine is preferred, an N-aminoalkylpiperazine is more preferred, and N-(aminoethyl)piperazine is particularly preferred.

The alkylene oxide to be ring-opening polymerized with such a piperazine, is preferably an alkylene oxide having at least 2 carbon atoms, and specifically, it may, for example, be ethylene oxide, propylene oxide, 1,2-butylene oxide, 2,3-butylene oxide or styrene oxide.

In the present invention, when the polyol (A) and another high molecular weight active hydrogen compound are used in combination, the amount of such another high molecular weight active hydrogen compound to be used is preferably at most 20 mass%, based on the total amount of both of them. If the amount to be used exceeds 20 mass%, the reactivity may be increased so much that the moldability, etc. may be deteriorated.

### POLYISOCYANATE COMPOUND (B)

The polyisocyanate compound (B) (hereinafter sometimes referred to as polyisocyanate (B)) may be an aromatic polyisocyanate compound having at least 2 isocyanate groups, a mixture of two or more of such compounds, or a modified polyisocyanate obtained by modifying it. Specifically, it may, for example, be a polyisocyanate such as tolylene diisocyanate (TDI), diphenylmethane diisocyanate (MDI) or polymethylene polyphenyl polyisocyanate (name: crude MDI), or its prepolymer type modified product, nurate modified product, urea modified product or carbodiimide modified product.

In the polyisocyanate (B), diphenylmethane diisocyanate type polyisocyanate and/or polymethylene polyphenyl polyisocyanate type polyisocyanate in the polyisocyanate component is preferably in an amount of from 0 mass% to 100 mass%, particularly preferably from 5 mass% to 80 mass%, and further preferably from 10 mass% to 60 mass%. When diphenylmethane diisocyanate type polyisocyanate and/or polymethylene polyphenyl polyisocyanate type polyisocyanate is in an amount of at most 80 mass%, the physical properties such as durability, or touch, etc. of a foam become good.

The polyisocyanate (B) may be a prepolymer. Specifically, it may be a polymer (prepolymer) of terminal isocyanate groups obtained by reacting tolylene diisocyanate, a diphenylmethane diisocyanate type polyisocyanate or a polymethylene polyphenyl polyisocyanate type polyisocyanate with the polyol (A1) or (A2).

The amount of the polyisocyanate (B) to be used is preferably in a range of from 80 to 125, particularly preferably in a range of from 85 to 120, as represented by 100 times of the number of isocyanate groups based on the total active hydrogen contained in the polyol (A), another high molecular weight active hydrogen compound, a crosslinking agent, water and the like (usually, a numerical value represented by such 100 times is referred to as an isocyanate index).

### CROSSLINKING AGENT

In the present invention, it is possible to use a crosslinking agent as the case requires. The crosslinking agent is preferably one having from 2 to 8 active hydrogen-containing groups on average per molecule and a hydroxyl value of from 200 to 2,000 mgKOH/g. The crosslinking agent may, for example, be a compound which has at least 2 active hydrogen-containing groups selected from hydroxyl groups, primary amino groups and secondary amino groups. Such crosslinking agents may be used alone or in combination as a mixture of two or more of them.

When the crosslinking agent has hydroxyl groups, from 2 to 8 hydroxyl groups are preferably contained, and such a crosslinking agent may, for example, be a polyhydric alcohol, a low-molecular-weight polyoxyalkylene polyol obtained by adding an alkylene oxide to the polyhydric alcohol or a polyol having a tertiary amino group.

Specific examples of the crosslinking agent having hydroxyl groups may be ethylene glycol, 1,4-butanediol, neopentyl glycol, 1,6-hexanediol, diethylene glycol, triethylene glycol, dipropylene glycol, monoethanolamine; diethanolamine, triethanolamine, glycerin, N-alkyl diethanol, a bisphenol A/alkylene oxide adduct, a glycerin/alkylene oxide adduct, a trimethylolpropane/alkylene oxide adduct, a pentaerythritol/alkylene oxide adduct, a sorbitol/alkylene oxide adduct, a sucrose/alkylene oxide adduct, an aliphatic amine/alkylene oxide adduct, an alicyclic amine/alkylene oxide adduct, a heterocyclic polyamine/alkylene oxide adduct, and an aromatic amine/alkylene oxide adduct, but the crosslinking agent is not limited thereto. Preferred is diethanolamine. When this compound is used, hysteresis loss is suited.

The heterocyclic polyamine/alkylene oxide adduct is obtained by adding an alkylene oxide to e.g. peperazine, a short-chain alkyl-substituted piperazine such as 2-methylpiperazine, 2-ethylpiperazine, 2-butylpiperazine, 2-hexylpiperazine, 2,5-, 2,6-, 2,3- or 2,2-dimethylpiperazine, or 2,3,5,6- or 2,2,5,5-tetramethylpiperazine, or an aminoalkyl-substituted piperazine such as 1-(2-aminoethyl)piperazine.

An amine type crosslinking agent having a primary amino group or secondary amino group may be an aromatic polyamine, an aliphatic polyamine or an alicyclic polyamine.

The aromatic polyamine is preferably an aromatic diamine. The aromatic diamine is preferably an aromatic diamine having at least one substituent selected from an alkyl group, a cycloalkyl group, an alkoxy group, an alkylthio group and an electron-attractive group, in an aromatic nucleus having amino groups bonded thereto, particularly preferably a diaminobenzene derivative. With respect to the above substituents except for the electron-attractive group, from 2 to 4 substituents are preferably bonded to the aromatic nucleus having amino groups bonded thereto. Particularly, they are bonded to at least one ortho-position to the position where the amino group is bonded, preferably all positions. With respect to the electron-attractive group, 1 or 2 groups are preferably bonded to the aromatic nucleus having amino groups bonded thereto. The electron-attractive group and another substituent may be bonded to one aromatic nucleus.

The alkyl group, alkoxy group or alkylthio group as the substituent preferably has at most 4 carbon atoms, and the cycloalkyl group is preferably a cyclohexyl group. The electron-attractive group may, for example, be a halogen atom, a trihalomethyl group, a nitro group, a cyano group or an alkoxycarbonyl group. It is particularly preferably a chlorine atom, a trifluoromethyl group or a nitro group.

The aliphatic polyamine may be a diaminoalkane having at most 6 carbon atoms, a polyalkylene polyamine, or a polyamine obtained by converting some or all hydroxyl groups in a low-molecular-weight polyoxyalkylene polyol to amino groups. Further, it is possible to use a polyamine having an aromatic nucleus, such as an aromatic compound having at least 2 aminoalkyl groups, an aromatic compound having a total of at least 2 aminoalkyl groups, or such an aromatic compound having substituents as mentioned above.

The alicyclic polyamine may be a cycloalkane having at least 2 amino groups and/or aminoalkyl groups.

Specific examples of the amine type crosslinking agent may be 3,5-diethyl-2,4(or 2,6)-diaminotoluene (DETDA), 2-chloro-p-phenylenediamine (CPA), 3,5-dimethylthio-2,4(or 2,6)-diaminotoluene, 1-trifluoromethyl-3,5-diaminobenzene, 1-trifluoromethyl-4-chloro-3,5-diaminobenzene, 2,4-toluenediamine, 2,6-toluenediamine, bis(3,5-dimethyl-4-aminophenyl)methane, 4,4-diaminodiphenylmethane, ethylenediamine, m-xylenediamine, 1,4-diaminohexane, 1,3-bis(aminomethyl)cyclohexane and isophorone diamine, but the crosslinking agent is not limited thereto.

Particularly preferred is diethyltoluenediamine (that is, one type or a mixture of two types of 3,5-diethyl-2,4(or 2,6)-diaminotoluene), dimethylthiotoluenediamine, or a diaminobenzene derivative such as monochlorodiaminobenzene or trifluoromethyldiaminobenzene.

The amount of the crosslinking agent to be used is preferably from 0.1 to 10 parts by mass based on 100 parts by mass of the polyol (A).

### CATALYST (C)

When the polyol (A) and the polyisocyanate (B) are reacted with each other, a catalyst (C) is preferably used.

The catalyst (C) is not particularly limited as long as it is a catalyst to accelerate the urethane-forming reaction. For example, it is preferably an amine compound, an organic metal compound, a reactive amine compound or a metal carboxylate. The reactive amine compound is an amine compound wherein a part of the amine compound structure is converted to a hydroxyl group or an amino group so as to be reactive with an isocyanate group. Further, an oligomerization catalyst to let isocyanate groups react each other, such as a metal carboxylate, may be used depending on the object. Such catalysts may be used alone or in combination as a mixture of two or more of them.

Specific examples of the amine compound may be triethylenediamine, a dipropylene glycol solution of bis-((2-dimethylamino)ethyl)ether and an aliphatic amine such as a morpholine.

Specific examples of the reactive amine compound may be dimethylethanolamine, trimethylaminoethylethanolamine and dimethylaminoethoxyethoxyethanol.

The amount of the amine compound catalyst or the reactive amine compound catalyst to be used, is preferably at most 2.0 parts by mass, more preferably from 0.05 to 1.5 parts by mass, per 100 parts by mass in total of the polyol (A) and another high molecular weight active hydrogen compound.

The organic metal compound catalyst may, for example, be an organic tin compound, an organic bismuth compound, an organic lead compound or an organic zinc compound, and specific examples may be di-n-butyltin oxide, di-n-butyltin dilaurate, di-n-butyltin, di-n-butyltin diacetate, di-n-octyltin oxide, di-n-octyltin dilaurate, monobutyltin trichloride, di-n-butyltin dialkyl mercaptan and di-n-octyltin dialkyl mercaptan. The amount of the organic metal compound catalyst to be used is preferably at most 2.0 parts by mass, more preferably from 0.005 to 1.5 parts by mass, per 100 parts by mass in total of the polyol (A) and another high molecular weight active hydrogen compound.

### BLOWING AGENT (D)

In the present invention, a blowing agent (D) is preferably at least one member selected from water and an inert gas. Specific examples of the inert gas may be air, nitrogen or liquefied carbon dioxide. The amount of such a blowing agent to be used is not particularly limited. When only water is used as the blowing agent, the amount is preferably at most 10 parts by mass, more preferably from 0.1 to 8 parts by mass, per 100 parts by mass in total of the polyol (A) and another high molecular weight active hydrogen compound.

It is possible to use other blowing agents than water and the inert gas, in a proper amount depending on the requirement such as a blowing magnification.

### OTHER COMPONENTS

Other formulating agents which may optionally be used may, for example, be a filler, a stabilizer, a colorant, a flame retardant, a cell opener, etc. The cell opener is preferably a polyol having from 2 to 8 hydroxyl groups on average, a hydroxyl value of from 20 to 100 mgKOH/g and an ethylene oxide content of from 50 to 100 mass%. Especially, use of the cell opener is preferred from the viewpoint of the moldability of a flexible polyurethane foam, specifically, the reduction of tight cells.

### PROCESS FOR PRODUCING FLEXIBLE POLYURETHANE FOAM

The process for producing a flexible polyurethane foam of the present invention comprises a step of injecting the reactive mixture (Y) containing the polyol (A), the polyisocyanate compound (B) and the second polysiloxane compound (S2) as the silicone foam stabilizer (S) and another component as the case requires into a mold to the inner surface of which the release agent (X) is adhered, and a step of sealing the mold and foaming and curving the reactive mixture (Y). This is a method commonly called a molding method.

In the present process, before the reactive mixture (Y) is injected, the release agent (X) is adhered to the inner surface of the mold. The adhesion method is not particularly limited, and a known means such as coating, spraying, dipping or electrostatic coating may suitably be employed.

The amount of the release agent (X) to be adhered to the inner surface of the mold is preferably from 0.1 to 250 g/m², more preferably from 1 to 200 g/m². If it is less than 0.1 g/m², the effect of suppressing cell roughening of the flexible polyurethane foam tends to be insufficient, and if it exceeds 250 g/m², such is unfavorable in view of economical efficiency.

The material of the mold is not particularly limited and it may, for example, be a metal such as iron, stainless steel, copper, aluminum or an aluminum alloy or a resin such as an epoxy resin or a phenol resin, and preferred is a metal, particularly preferred is a metal such as aluminum.

The temperature of the inner surface of the mold when the release agent (X) is adhered is not particularly limited but is preferably from 30 to 70°C in view of workability.

When the flexible polyurethane foam is produced by the molding method, it is preferred to employ a method of directly injecting the reactive mixture (Y) made by mixing the above-described components to a mold (that is, a reaction-injection molding method) or a method in which the reactive mixture (Y) made by mixing the above-described components, is injected into a mold in an open state, followed by sealing. For example, it is preferably carried out by a method of injecting the reactive mixture (Y) into a mold by using a low pressure machine or a high pressure machine, i.e. a method in which the reactive mixture (Y) is injected into a mold in an open state, followed by sealing. The high pressure machine is preferably of a usual type to mix two liquids, i.e. one of the liquids being the polyisocyanate (B) and the other liquid being a mixture of all raw materials other than the polyisocyanate (B). Depending on a case, it is possible to form the reactive mixture (Y) by mixing three components in total by having the catalyst (C) or the cell opener as a separate component (which is used usually as dispersed or dissolved in a part of a high molecular weight polyol).

The temperature of the reactive mixture (Y) is preferably from 10 to 40°C. When it is lower than 10°C, the viscosity of the reactive mixture (Y) significantly increases, whereby the mixed state of the reactive mixture (Y) tends to be deteriorated. When it is higher than 40°C, the reactivity significantly increases, whereby the moldability, etc. tends to be deteriorated.

The temperature of the mold during injection is not particularly limited, but it is preferably from 10°C to 80°C, particularly preferably from 30°C to 70°C.

The curing time is not particularly limited, but it is preferably from 3 to 20 minutes, particularly preferably from 3 to 10 minutes, further preferably from 1 to 7 minutes. If the curing time is longer than 20 minutes, such is not desirable from the viewpoint of productivity, and if it is shorter than 1 minute, insufficient curing becomes a problem.

According to the production process of the present invention, as shown in the following Examples, it is possible to suitably form a flexible polyurethane foam by using a polyol derived from a vegetable fat/oil (polyol (A1)). According to the production process of the present invention, it is possible to obtain a flexible polyurethane foam molded product having high rebound resilience and good cushioning characteristic, and having good air flow and having cell roughening at the skin portion suppressed.

### EXAMPLES

Now, the present invention will be described in further detail with reference to Examples and Comparative Examples, but it should be understood that the present invention is by no means limited thereto.

### PREPARATION EXAMPLE 1: PREPARATION OF SLURRY CATALYST CONTAINING

### POLYMERIZATION CATALYST (a)

In this Example, a slurry catalyst containing a polymerization catalyst (a) for production of the polyoxyalkylene polyol (iii) as the polyol (A1) derived from a vegetable fat/oil was prepared.

By using a zinc hexacyanocobaltate complex (a DMC catalyst) having tert-butyl alcohol coordinated thereto, as the polymerization catalyst (a), a slurry mixture of the DMC catalyst and the following polyol P (a DMC/TBA catalyst) was prepared by the following process. The concentration (the active ingredient concentration) of the DMC catalyst (the solid catalyst component) contained in the slurry is 5.33 mass%.

### PRODUCTION OF DMC/TBA CATALYST

Into a 500 mL flask, an aqueous solution comprising 10.2 g of zinc chloride and 10 g of water was put. An aqueous solution comprising 4.2 g of potassium hexacyanocobaltate (K₃Co(CN)₆) and 75 g of water was dropwise added to the zinc chloride aqueous solution in the flask with stirring at 300 rpm (number of revolutions/min) over 30 minutes. During the dropwise addition, the mixed solution in the flask was maintained at 40°C. After completion of the dropwise addition of the potassium hexacyanocobaltate aqueous solution, the mixture in the flask was further stirred for 30 minutes, and then, a mixture of 80 g of tert-butyl alcohol (hereinafter referred to as TBA), 80 g of water and 0.6 g of the following polyol P was added thereto, followed by stirring at 40°C for 30 minutes and further at 60°C for 60 minutes.

The polyol P is a polyoxypropylene diol which is obtained by polymerizing propylene oxide to propylene glycol by using a KOH catalyst and is purified by dealkalization, and which has a hydroxyl equivalent of 501.

The mixture thus obtained was filtrated under pressure (0.25 MPa) by using a circular filter plate having a diameter of 125 mm and a quantitative filter paper for fine particles (No. 5C manufactured by ADVANTEC) to separate a solid (a cake) containing a double metal complex.

Then, the obtained cake containing a double metal complex was transferred into a flask, and a mixture of 36 g of TBA and 84 g of water was added thereto, followed by stirring for 30 minutes. Then, filtration under pressure was carried out under the same condition as above to obtain a cake. The obtained cake was transferred into a flask, and a mixture of 108 g of TBA and 12 g of water was further added thereto, followed by stirring for 30 minutes to obtain a liquid (slurry) in which the double metal cyanide complex catalyst (the DMC catalyst) was dispersed in the TBA/water mixed solution. To the slurry, 120 g of the above polyol P was added, followed by mixing, and then, under reduced pressure, a volatile component was distilled off at 80°C for 3 hours, further at 115°C for 3 hours, to obtain a slurry DMC catalyst (a DMC/TBA catalyst).

### PREPARATION EXAMPLE 2: PREPARATION OF POLYOL(A1-1) DERIVED FROM SOYBEAN OIL

In this Example, as the initiator (b), a polyol derived from a vegetable fat/oil produced by a blowing method using soybean oil as a raw material (Soyol R2-052F, tradename, manufactured by Urethane Soy Systems Company) was used. The measured values of the polyol derived from soybean oil were such that the hydroxyl value was 45.3 (mgKOH/g), the acid value was 4.3 (mgKOH/g), Mn (number average molecular weight) was 1,578, Mw (mass average molecular weight) was 6,562 and the ratio of Mw/Mn was 4.16.

First, into a 500 ml stainless steel pressure proof reactor with a stirrer, 248.2 g of the initiator (b) and 682 mg of the slurry catalyst prepared in Preparation Example 1 (36 mg as the solid catalyst component) were introduced. After flushing inside of the reactor with nitrogen, the temperature was raised to 120°C, and vacuum-dehydration was carried out for 2 hours. After that, a liquid mixture of 24.1 g of propylene oxide (PO) and 12.2 g of ethylene oxide (EO) was supplied into the reactor over 40 minutes, followed by continued stirring for 2 hours and 30 minutes, and stop of pressure dropping was confirmed. During the stirring, the inner temperature of the reactor was kept at 120°C and the stirring rate at 500 rpm to let the reaction proceed.

Thus, the polyol (A1-1) derived from soybean oil was obtained. The appearance of the obtained polyol was a transparent liquid at room temperature. Of the polyol (A1-1), Mw was 8,516, Mn was 2,338, Mw/Mn was 3.64 and the hydroxyl value was 43.8 mgKOH/g.

### EXAMPLES AND COMPARATIVE EXAMPLES

### (RAW MATERIALS)

Table 1 shows the formulation of the reactive mixture (Y) and the type of the release agent (X) used in the following Examples and Comparative Examples. In Table 1, the unit of the amounts of the respective components other than the polyisocyanate is parts by mass.

The raw materials shown in Table 1 are as follows.

Polyol (A1-1): polyol (A1-1) derived from soybean oil prepared in the above PREPARATION EXAMPLE 2

Polyol (A1-2): a polyol derived from a vegetable fat/oil produced by a blowing method using soybean oil as a raw material (Soyol R2-052F, tradename, manufactured by Urethane Soy Systems Company) (the above initiator (b))

Polyol (A2-1): a polyoxypropyleneoxyethylene polyol having 4 active hydrogen-containing groups on average and a hydroxyl value of 28 mgKOH/g and containing 13 mass% of a polyoxyethylene group at its terminals

Polyol (A2-2): a polyoxypropyleneoxyethylene polyol having 3 active hydrogen-containing groups on average and a hydroxyl value of 28 mgKOH/g and containing 17 mass% of a polyoxyethylene group at its terminals

Polyol (A2-3): a polymer-dispersed polyol obtained by polymerizing acrylonitrile with styrene in a polyoxypropyleneoxyethylene polyol having 3 active hydrogen-containing groups on average and a hydroxyl value of 34 mgKOH/g and containing 14.5 mass% of a polyoxyethylene group at its terminals. The polymer-dispersed polyol has a hydroxyl value of 23.5 mgKOH/g and a polymer particle content of 35 mass%.

Crosslinking agent 1: diethanolamine

Crosslinking agent 2: a polyoxypropyleneoxyethylene polyol having 6 active hydrogen-containing groups on average and a hydroxyl value of 445 mgKOH/g and containing 28 mass% of a polyoxyethylene group at its terminals

Cell opener: a polyoxypropyleneoxyethylene polyol obtained by random copolymerization of propylene oxide with ethylene oxide in a mass ratio of 20/80, having 3 active hydrogen-containing groups on average and a hydroxyl value of 48 mgKOH/g

Catalyst (C-1): a 33 mass% dipropylene glycol (DPG) solution of triethylenediamine (tradename: TEDA-L33, manufactured by TOSOH CORPORATION)

Catalyst (C-2): a 70 mass% DPG solution of bis-(2-dimethylamino) ether (tradename: TOYOCAT ET, manufactured by TOSOH CORPORATION)

Blowing agent (D): water

Polyisocyanate compound (B-1): a mixture of TDI-80 and crude MDI in a mass ratio of 80/20 (tradename: CORONATE 1021, manufactured by NIPPON POLYURETHANE INDUSTRY CO., LTD.)

Further, the amount of the polyisocyanate compound used is shown by an isocyanate index (100 times of an equivalent ratio)

Five commercially available polysiloxane derivatives having molecular weights shown in Table 2 were obtained.

Polysiloxane compound (S1-1): dimethylpolysiloxane derivative 100 mass% (tradename: SZ-1671, manufactured by TORAY Dow Corning Corporation)

Polysiloxane compound (S1-2): a mixture of a dimethylpolysiloxane derivative and a polyol having 3 active hydrogen-containing groups on average and a hydroxyl value of 56 mgKOH/g in a mass ratio of 57/43 (tradename: SZ-1142, manufactured by TORAY Dow Corning Corporation)

Polysiloxane compound (S2-1): a mixture of a dimethylpolysiloxane derivative and a polyol having 3 active hydrogen-containing groups on average and a hydroxyl value of 28 mgKOH/g in a mass ratio of 22/78 (tradename: L-5309, manufactured by Momentive Performance Materials Inc.)

Polysiloxane compound (S2-2): a mixture of a dimethylpolysiloxane derivative and a polyol having 3 active hydrogen-containing groups on average and a hydroxyl value of 38 mgKOH/g in a mass ratio of 25/75 (tradename: SF-2962, manufactured by TORAY Dow Corning Corporation)

Polysiloxane compound (S3): dimethylpolysiloxane (tradename: SH-200C FLUID 100 CS, manufactured by TORAY Dow Corning Corporation).

The dimethylpolysiloxane derivative in the above (S1-1) and (S1-2) is a compound represented by the above formula (I) wherein R², R³ and Z are all methyl groups.

The dimethylpolysiloxane derivative in the above (S2-1) and (S2-2) is a compound represented by the above formula (II) wherein R⁵, R⁶ and Z' are all methyl groups.

Of these dimethylpolysiloxane derivatives, the number average molecular weight and the molar ratio of EO/PO constituting the alkyleneoxide chain (AO) are shown in the following Table 2.

Further, the polysiloxane (S3) is dimethylpolysiloxane having a number average molecular weight of 6,000. This compound corresponds to a compound of the above formula (II) wherein n'=0.

As the release agent (X), the following five release agents were used.

(X1): a release agent consisting of a release agent stock solution (hydrocarbon wax release agent, manufactured by CHUKYO YUSHI CO., LTD., tradename: M-352, melting point of non-volatile component: 98°C, non-volatile component content: 3 mass%) alone

(X2): a release agent having 90 parts by mass of the above release agent stock solution and 10 parts by mass of the polysiloxane compound (S2-1) as identified in Table 2 mixed

(X3): a release agent having 50 parts by mass of the above release agent stock solution and 50 parts by mass of the polysiloxane compound (S1-1) as identified in Table 2 mixed

(X4): a release agent having 95 parts by mass of the above release agent stock solution and 5 parts by mass of the polysiloxane compound (S1-2) as identified in Table 2 mixed

(X5): a release agent having 90 parts by mass of the above release agent stock solution and 10 parts by mass of the polysiloxane compound (S3) as identified in Table 2 mixed

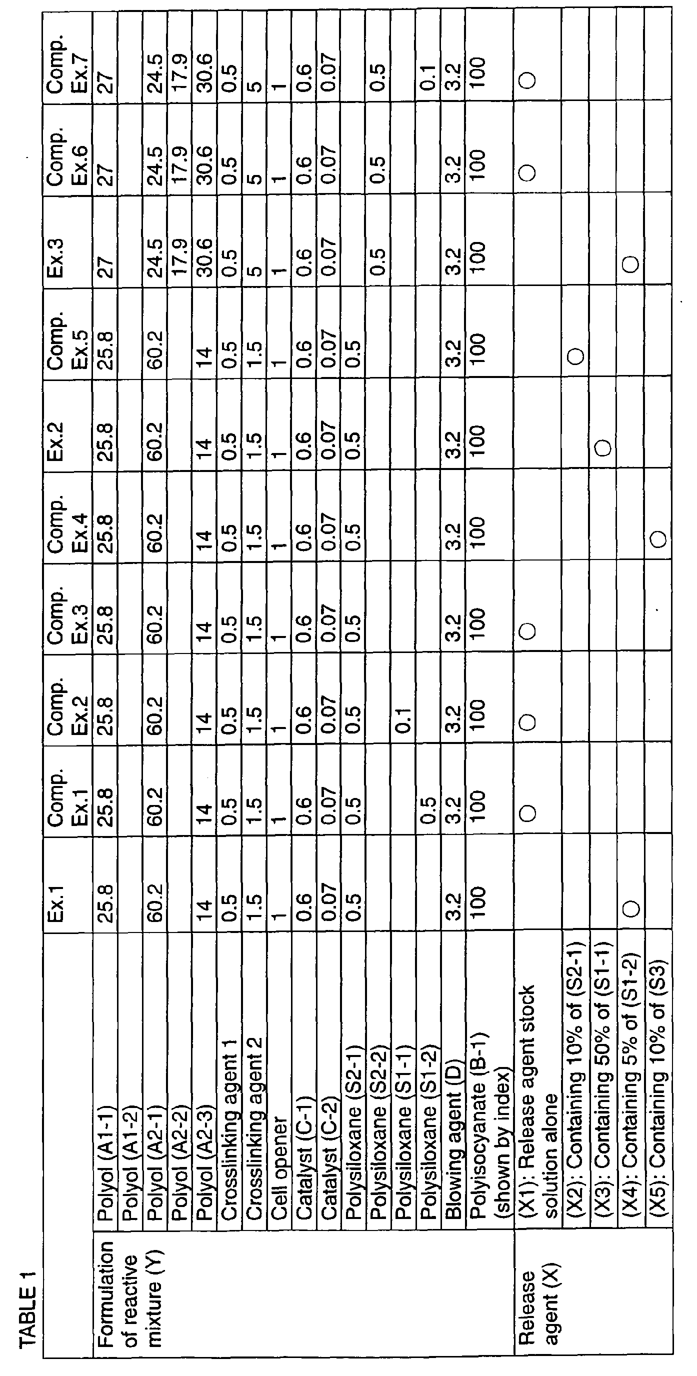

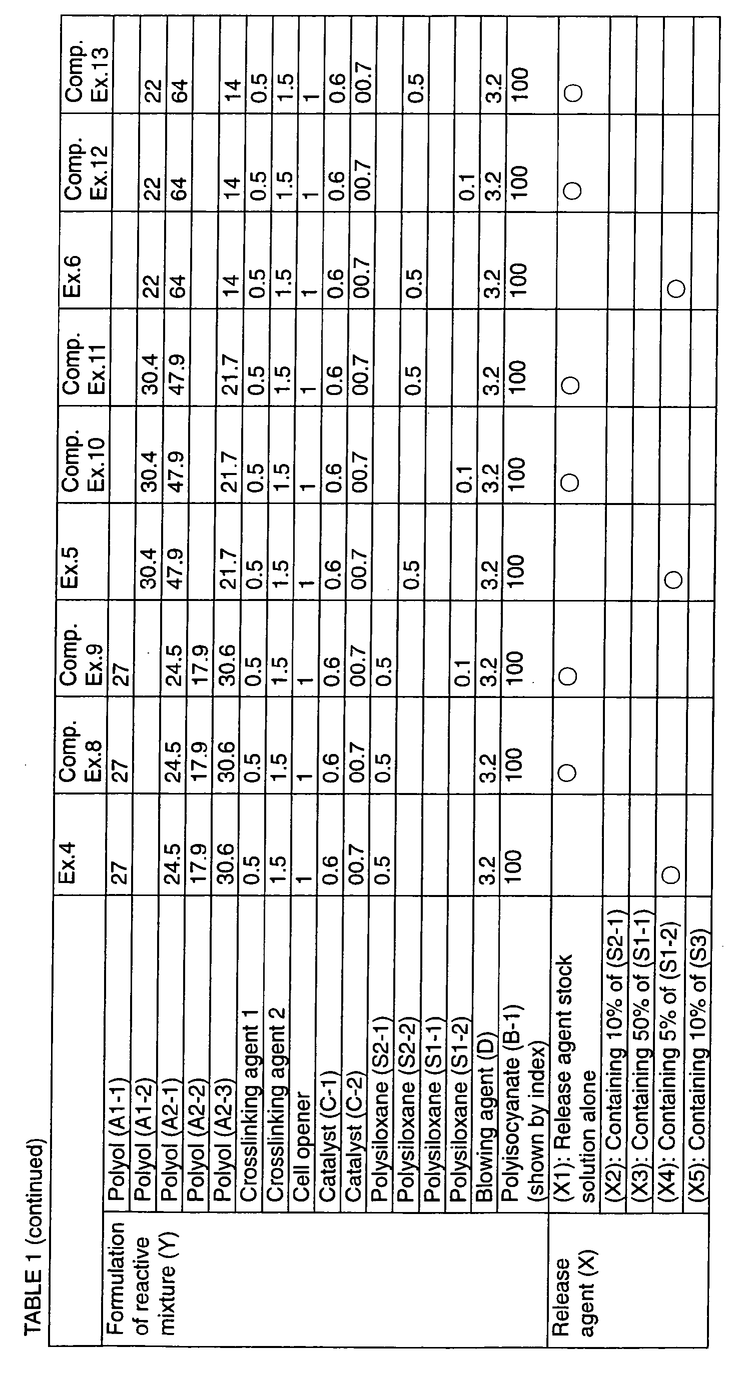

**TABLE 2**

| | S1-1 | S1-2 | S2-1 | S2-2 | S3 |
|---|---|---|---|---|---|
| Formula | (I) | (I) | (II) | (II) | (II), n'=0 |
| Number average molecular weight | 4,200 | 8,000 | 750 | 750 | 6,000 |
| EO/PO ratio | 75/25 | 35/65 | 100/0 | 100/0 | - |

### (PRODUCTION OF FLEXIBLE POLYURETHANE FOAM)

Flexible polyurethane foams were produced in formulations as identified in Table 1.

First, a mixture of all raw materials (a polyol-containing mixture) except for the polyisocyanate compound among raw materials of the reactive mixture (Y) was adjusted to have a liquid temperature of 30°C ± 1°C. Separately, the polyisocyanate compound was adjusted to have a liquid temperature of 25°C ± 1°C.

Then, to the polyol-containing mixture, the polyisocyanate compound was added until a predescribed index, followed by stirring and mixing by a high-speed mixer (3,000 rpm) for 5 seconds, and the mixture was immediately injected into a mold heated at 60°C and sealed. As the mold, an aluminum mold having an inside dimension of 400 mm in length × 400 mm in width × 100 mm in height, the inner surface of which was uniformly coated with the release agent (X) and which was then heated to 60°C was used. The coating amount of the release agent (X) was 30 g/m².

Then, after curing at 60°C for 7 minutes, a flexible polyurethane foam was taken out from the mold. After crashing, the foam was left in a room (temperature: 23°C and relative humidity: 50%) for 24 hours, followed by evaluation of moldability and measurements of various foam physical properties by the following methods. The measurement results are shown in Table 3.

Crashing is a step in which after the flexible polyurethane foam is taken out from the mold, the foam is continuously compressed to 75% of the foam thickness.

### (METHODS FOR MEASUREMENT OF FOAM PHYSICAL PROPERTIES)

To evaluate moldability of the foam, the average cell size at the skin portion was measured to evaluate the cell state (cell roughening). Cell roughening was evaluated on the basis of ○: the average cell size of 500 µm or smaller and ×: the average cell size of 700 µm or larger.

As the foam physical properties, the overall density, the core density, the 25% hardness (ILD hardness), the air flow, the rebound resilience, the overall rebound resilience (overall), the rebound resilience at the core portion, the tear strength, the tensile strength, the elongation, the compression set, the air flow and the hysteresis loss were evaluated.

The cell size at the skin portion is a value measured by an image processing system apparatus (tradename: Qwin-Pro, manufactured by Leica Camera AG).

The density at the core portion and the rebound resilience at the core portion were measured by using a sample cut out in a size of 400 mm × 400 mm × 50 mm in height from the center portion of the foam excluding the skin portion.

The overall density, the 25% hardness, the rebound resilience, the tear strength, the tensile strength, the elongation, the compression set, the air flow and the hysteresis loss were measured in accordance with JIS K6400 (1997 edition).

### (VIBRATION CHARACTERISTICS)

With respect to the vibration characteristics, the resonance frequency (unit: Hz), the transmissibility at the resonance frequency (measurement of absolute displacement) and the transmissibility at 6 Hz were evaluated. The measurements were carried out in accordance with JASO B407-87. Tekken type (load: 490 N) was used as a pressing platen, and the vibration total amplitude was adjusted to be 5 mm.

The vibration characteristics are an index to evaluation of the riding comfort of an automobile seat, and when the value of the resonance frequency is at most 4 Hz, the vibration in a human-sensitive frequency range is efficiently attenuated, whereby a good riding comfort can be obtained. The resonance frequency is preferably small. Further, the smaller the transmissibility at the resonance frequency and transmissibility at 6 Hz, the better the riding comfort.

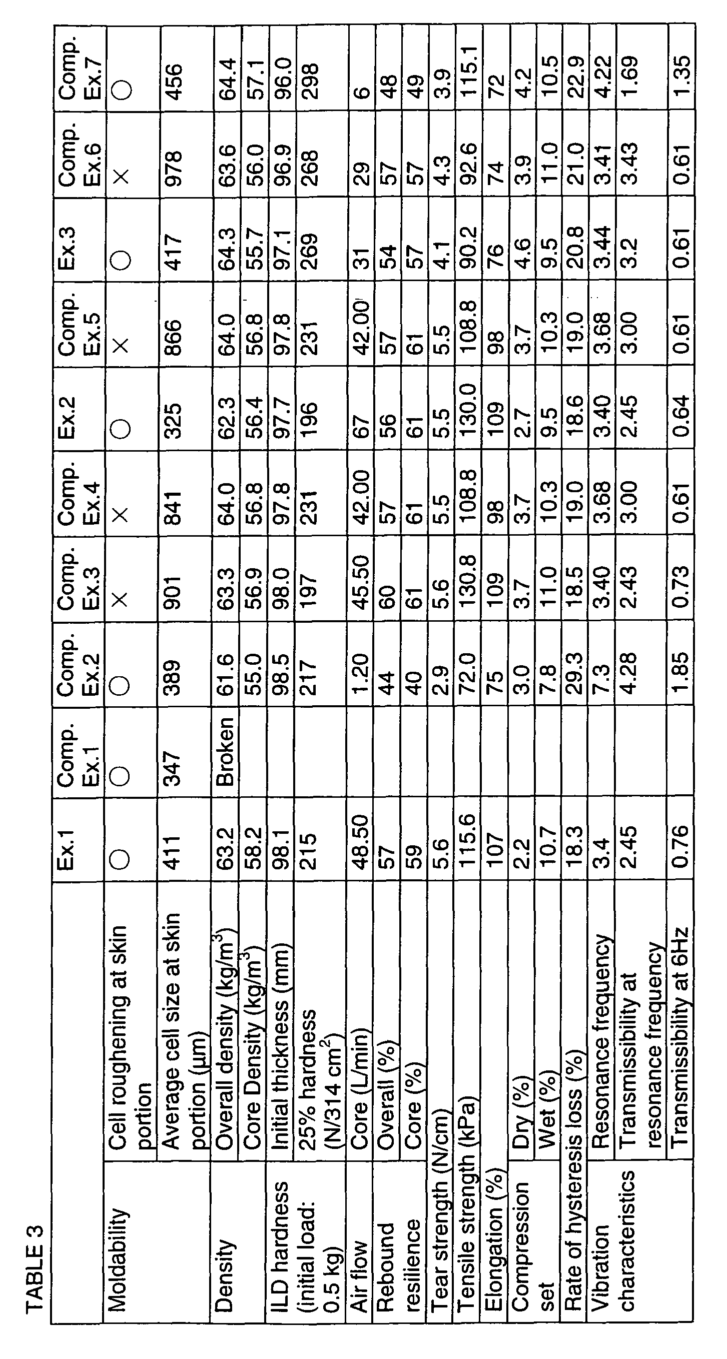

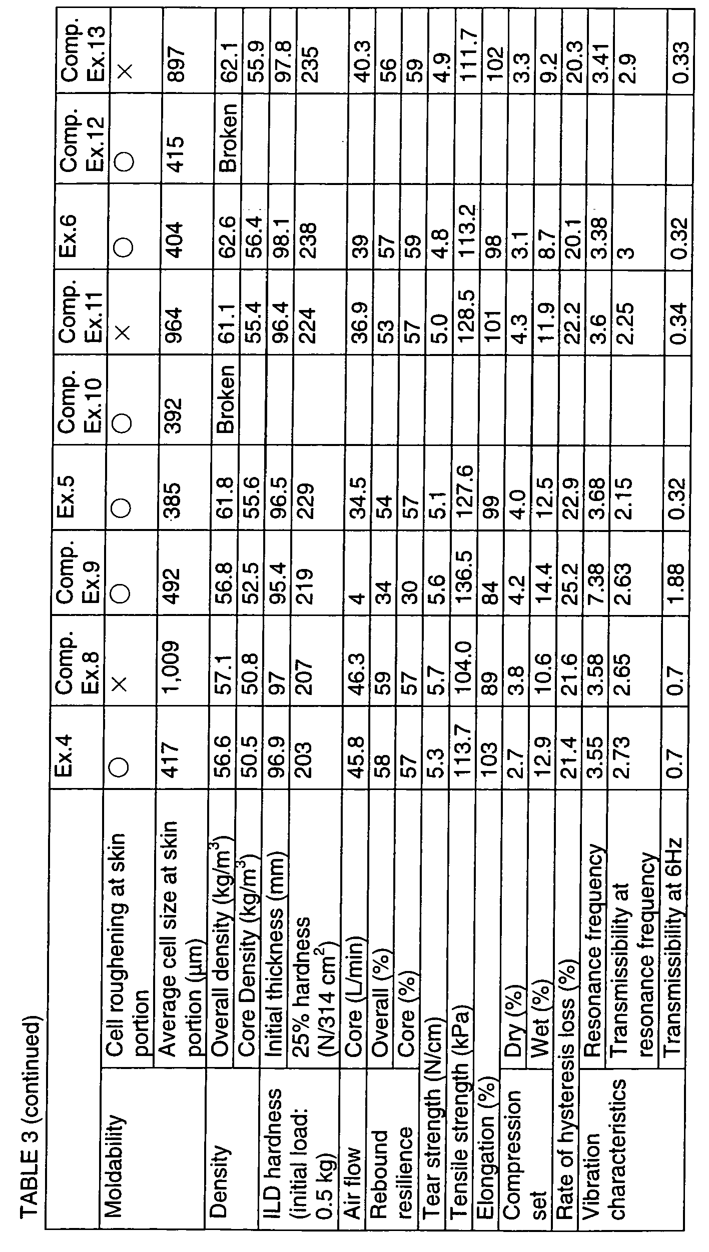

From the results shown in Table 3, in Examples 1 to 6 wherein the release agent (X) contained the first polysiloxane (S1) and the reactive mixture (Y) contained the second polysiloxane compound (S2), the cell roughening was suppressed, the rebound resilience was high, and good air flow was obtained. Further, good foam physical properties and vibration characteristics were obtained.

Whereas in Comparative Examples 3, 5, 6, 8, 11 and 13 wherein the release agent stock solution alone (X1) was used as the release agent, although the reactive mixture (Y) contained the second polysiloxane compound (S2), cell roughening occurred, and also in Comparative Example 4 wherein the release agent (X5) containing a polysiloxane having no alkylene oxide chain was used as the releasing agent, cell roughening occurred.

Further, as shown in Comparative Examples 1, 2, 7 and 9, when the reactive mixture (Y) contained both the first polysiloxane (S1) and the second polysiloxane compound (S2) in a case where the release agent stock solution alone (X1) was used as the release agent, cell roughening was suppressed, but in Comparative Examples 1.10 and 12, breakage occurred, and in Comparative Examples 2, 7 and 9, the air flow and the rebound resilience significantly deteriorated.

### INDUSTRIAL APPLICABILITY

The flexible polyurethane foam molded product produced by the present invention is suitable as an interior material for an automobile, and particularly, it can be used for seat cushions, seat backs, head rests, arm rests, etc. Further, its application is not limited thereto, and other applicable fields may, for example, be an interior material for a railway vehicle, beddings, mattresses, cushions, etc.

The entire disclosure of Japanese Patent Application No. 2006-341615 filed on December 19, 2006 including specification, claims and summary is incorporated herein by reference in its entirety.

## Claims

1. A process for producing a flexible polyurethane foam, which comprises a step of injecting a reactive mixture (Y) containing a polyol (A), a polyisocyanate compound (B) and a silicone foam stabilizer (S) into a mold to the inner surface of which a release agent (X) is adhered, and a step of sealing the mold and foaming and curing the reactive mixture (Y), wherein the release agent (X) contains a first polysiloxane compound (S1) having a number average molecular weight of at least 1,200 and at most 40,000, in which an organic group having an alkylene oxide chain is bonded to some of silicon atoms constituting the polysiloxane chain; the polyol (A) contains a polyol (A1) derived from a vegetable fat/oil; and the silicone foam stabilizer (S) in the reactive mixture (Y) is a second polysiloxane compound (S2) having a polysiloxane chain and having a number average molecular weight of at least 150 and less than 1,200.

2. The process for producing a flexible polyurethane foam according to Claim 1, wherein the polyol (A1) derived from a vegetable fat/oil is a polyol derived from soybean oil.

3. The process for producing a flexible polyurethane foam according to Claim 1 or 2, wherein the polyol (A) contains the polyol (A1) derived from a vegetable fat/oil and at least one other polyol (A2).

4. The process for producing a flexible polyurethane foam according to any one of Claims 1 to 3, wherein the mass ratio (A1) /(A2) of the polyol (A1) to the polyol (A2) in the polyol (A) is from 10%90 to 90/10.

5. The process for producing a flexible polyurethane foam according to any one of Claims 1 to 4, wherein the polyol (A) further contains a polymer-dispersed polyol.

6. The process for producing a flexible polyurethane foam according to any one of Claims 1 to 5, wherein the first polysiloxane compound (S1) has a structure represented by the following formula (I): 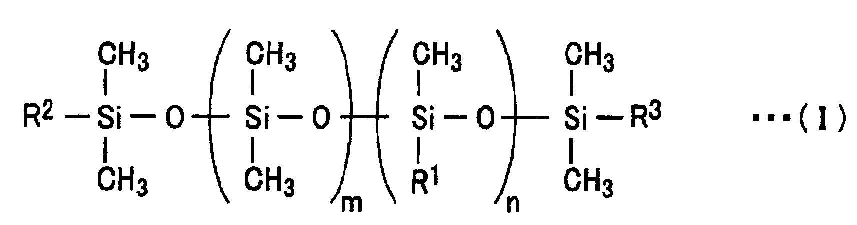 wherein R¹ is -C₃H₆O-(AO)-Z each of R² and R³ is a C₁₋₂₂ linear or branched alkyl group or -C₃H₆O-(AO)-Z, R¹, R² and R³ are independent of one another and may be the same or different, m>0 and n>0; AO is an alkylene oxide chain formed by ring-opening polymerization of ethylene oxide and propylene oxide or an alkylene oxide chain formed by ring-opening polymerization of ethylene oxide alone, and the average number of ethylene oxide and propylene oxide per molecule is from 4 to 100; and Z is a C₁₋₂₂ linear or branched alkyl group or a hydrogen atom.

7. The process for producing a flexible polyurethane foam according to any one of Claims 1 to 6, wherein the second polysiloxane compound (S2) has a structure represented by the following formula (II): 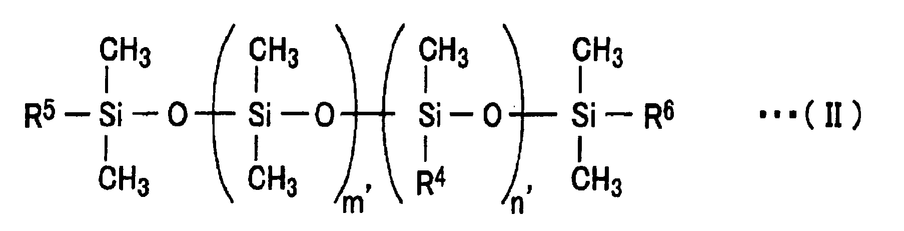 wherein R⁴ is -C₃H₆O-(EO)-Z', each of R⁵ and R⁶ is a C₁₋₂₂ linear or branched alkyl group or -C₃H₆O-(EO)-Z', R⁴, R⁵ and R⁶ are independent of one another and may be the same or different, m'≧0 and n'≧O; EO is an ethylene oxide chain formed by ring-opening polymerization of ethylene oxide, and the average number per molecule is from 1 to 15; and Z' is a C₁₋₂₂ linear or branched alkyl group or a hydrogen atom.

8. The process for producing a flexible polyurethane foam according to any one of Claims 1 to 7, wherein the release agent (X) comprises a release agent stock solution containing a hydrocarbon wax component, and the above polysiloxane compound (S1) contained in the stock solution.

9. The process for producing a flexible polyurethane foam according to any one of Claims 1 to 8, wherein the polyisocyanate (B) is at least one member selected from the group consisting of tolylene diisocyanate, diphenylmethane diisocyanate, polymethylene polyphenyl isocyanate, and a modified product thereof.

10. A flexible polyurethane foam produced by the process as defined in any one of Claims 1 to 9.
